# EUROPEAN PATENT APPLICATION

(11) **EP 2 442 336 A1**
(43) Date of publication of application: **18.04.2012**
(21) Application number: 10786234.4
(22) Date of filing: 11.06.2010
(51) Int. Cl.: H01H 19/14, F24C 15/00, H01H 3/08

(54) **STRUCTURE FOR PREVENTING ENCODER BUTTON FROM COMING OUT OF PLACE**

(30) Priority: 11.06.2009 JP 2009140252
(71) Applicant: Sharp Kabushiki Kaisha, Osaka-shi, Osaka 545-8522 (JP)
(72) Inventor: NISHIJIMA, Masahiro, Osaka 545-8522 (JP); INA, Noriko, Osaka 545-8522 (JP)
(74) Representative: Treeby, Philip David William
(86) International application number: PCT/JP2010/059901
(87) International publication number: WO 2010/143703

(57) **Abstract**

Inner claws of a fitting part 210 of a dial 105 are engaged with engaging grooves in a rotary encoder 320. A plurality of retaining projections are formed in the dial 105. The retaining projections project radially outward from the fitting part 210 at circumferential intervals from one another. A through hole 500 through which the fitting part 210 can pass and a plurality of recesses through which the plurality of retaining projections can pass are formed in a door frame 120. The plurality of retaining projections are allowed to pass through the recesses only when the retaining projections are coincident in circumferential phase with the recesses. The retaining projections are positioned on one side of the recess portions opposite to an operation part 200 side so as to be freely turnable in synchronism with turning of the operation part 200.

## Description

### TECHNICAL FIELD

The present invention relates to a structure for preventing an encoder button from coming out of place and, particularly to a structure for preventing an encoder button from coming out of place which is suitable for use in microwave ovens, steam cookers or other cooking devices.

### BACKGROUND ART

A conventional structure for preventing an encoder button from coming out of place is known from JP 2005-197070 A (Patent Literature 1).

This structure for preventing the encoder button from coming out of place includes an annular-shaped rotary flange and a rotor, where the rotary flange has a plurality of elastic engaging claws projecting from a lower face of the rotary flange. The plurality of elastic engaging claws are placed so as to be circumferentially spaced from one another. The elastic engaging claws are each formed into an L shape with its forward end portion directed inward.

On the other hand, the rotor has a rotatable cylinder portion, and an outer peripheral surface of the cylinder portion has a plurality of engaging holes, where the plurality of engaging holes are placed so as to be circumferentially spaced from each other.

In the structure for preventing the encoder button from coming out of place shown above, the elastic engaging claws of the rotary flange are snap-in engaged with the engaging holes of the rotor, so that the rotary flange does not come out from the rotor.

In the conventional structure for preventing the encoder button from coming out of place shown above, the elastic engaging claws of the rotary flange are only snap-in engaged with engaging holes of the rotor. Therefore, when a user pulls up the rotary flange with more than a certain level of force, the elastic engaging claws unavoidably come out from a plurality of engaging holes, unavoidably leading to undesired disassembling of the structure for preventing the encoder button from coming out of place.

Meanwhile, there is a demand for the possibility that the structure for preventing the encoder button from coming out of place can be disassembled smoothly and easily during maintenance of steam cookers or the like.

### CITATION LIST

### PATENT LITERATURE

PATENT LITERATURE 1: JP 2005-197070 A (Figure 2)

### SUMMARY OF INVENTION

### TECHNICAL PROBLEM

An object of the invention is, therefore, to provide a structure for preventing an encoder button from coming out of place which is capable of reliably preventing the encoder button from coming out from the rotary encoder and moreover which can be disassembled and assembled easily and smoothly.

### SOLUTION TO PROBLEM

In order to solve the problem, a structure for preventing an encoder button from coming out of place according to the present invention comprises:
a rotary encoder having a stationary portion and a rotary part rotating relative to the stationary portion, wherein the rotary part has a plurality of engaging grooves which are positioned on an outer circumferential surface of the rotary part so as to extend axially with circumferential distances from one another;
an encoder button having an operation part having an outer circumferential surface, a generally cylindrical-shaped fitting part which projects axially from a central side of the operation part and which is to be fitted to the rotary part, an engaging part which is provided in the fitting part so as to be engaged with the engaging grooves, and at least one or more retaining projections which project from the fitting part radially outward so as to be circumferentially spaced from one another; and
a plate member having a through hole into which the fitting part is to be fitted, and at least one or more recess portions through which the retaining projections are allowed to pass, wherein
the retaining projections are allowed to pass through the recess portions when the retaining projections are coincident in circumferential phase with the recess portions, while the retaining projections are axially engaged with the plate member when the retaining projections are non-coincident in circumferential phase with the recess portions.

The number of the retaining projections and the number of recess portions may be equal to each other, or the number of the retaining projections may be smaller than the number of the recess portions. When the number of the retaining projections is smaller than the number of plurality of recess portions, the terms "being coincident in phase" refer to a state that all the retaining projections are coincident in phase with the same number of recess portions as the number of retaining projections out of the plurality of recess portions.

Also, the terms "generally cylindrical-shaped" includes cylindrical shapes.

According to this invention, in the state that the fitting part of the encoder button is fitted into the engaging grooves of the rotary encoder, the retaining projections are positioned on one side of the recess portions opposite to the operation part side, and the retaining projections are allowed to pass through the recess portions only when the retaining projections are coincident in circumferential phase with the recess portions.

Therefore, at places where the retaining projections are non-coincident in circumferential phase with the recess portions, more specifically, at places other than one or a few fittable-and-removable places during one turn, even if the user pulls up the encoder button with large force in a direction for increased distance from the plate member, the retaining projections collide with the surface of the plate member that are adjacent to the opening on the side opposite to the operation part side, so that the encoder button, receiving a normal force from the surface, can reliably be prevented from going farther than a specified distance from the plate member. Therefore, the encoder button never comes out from the rotary encoder.

Also, according to this invention, when the structure for preventing an encoder button from coming out of place needs to be disassembled for maintenance or the like, turning the encoder button appropriately as required makes it possible to disassemble the structure for preventing the encoder button from coming out of place easily and smoothly only by pulling out the encoder button in the state that the retaining projections are coincident in circumferential phase with the recess portions. Therefore, the maintenance can be achieved easily and smoothly.

In one embodiment, the engaging part is an inner claw bent radially inward in a V shape from a forward end on one side of the fitting part opposite to the operation part side, and
the inner claw has a planar portion in a surface facing radially inward.

According to this embodiment, since each of the inner claws has a planar portion in its surface facing radially inward, the coefficient of static friction between the planar portion and the engaging grooves can be lowered. Therefore, at a place where the retaining projections are coincident in circumferential phase with the recess portions, the fitting part of the encoder button can be unfastened from the engaging grooves of the rotary encoder by applying more than a certain level of force without pulling with excessively large force. Therefore, maintenance involving the disassembly of the encoder button can be achieved even more easily.

In one embodiment, the encoder button has a coupling part for coupling the fitting part and the operation part to each other, and
peripheral portions of the plate member around the through hole are subjected to chamfering surface cutting.

According to this embodiment, friction generated upon contact during the rotation between the fitting part and the chamfering surface cutting portion in peripheral portions of the through hole of the plate member can be reduced. Therefore, wear of contact-sliding surfaces of the encoder button and the plate member can be reduced, and the operation part can be smoothly operated.

### ADVANTAGEOUS EFFECTS OF INVENTION

According to the structure for preventing an encoder button from coming out of place in this invention, the encoder button can reliably be prevented from coming out of place from the rotary encoder, and moreover fitting and removing of the encoder button from the rotary encoder can be achieved easily and smoothly during the maintenance.

### BRIEF DESCRIPTION OF DRAWINGS

Fig. 1 is a perspective view showing appearance of a steam cooker according to an embodiment of the invention;
Fig. 2 is an outline configurational view of the steam cooker;
Fig. 3 is a perspective view showing an encoder button of the steam cooker;
Fig. 4 is a perspective view showing a rotary encoder placed on a circuit board of the steam cooker;
Fig. 5 is a perspective view showing a door frame of the steam cooker;
Fig. 6 is a view showing a shape of an encoder button insertion opening on the door frame;
Fig. 7 is a schematic view of a state that the encoder button, the door frame and the rotary encoder are engaged with one another; and
Fig. 8 is a sectional view of Fig. 6 as taken along a line indicated by arrows F8-F8.

### DESCRIPTION OF EMBODIMENTS

Hereinbelow, the present invention will be described in detail by embodiments thereof illustrated in the accompanying drawings.

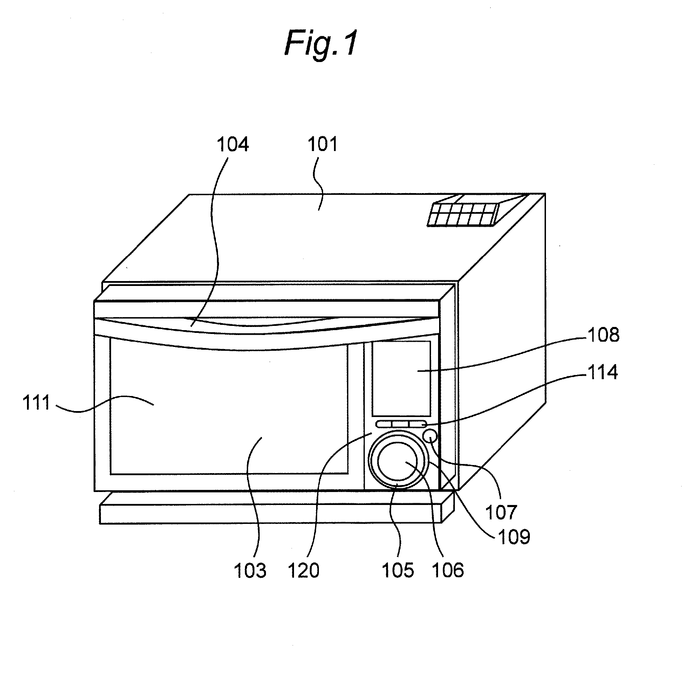

Fig. 1 is a perspective view of a steam cooker according to an embodiment of the invention, as viewed from its front side.

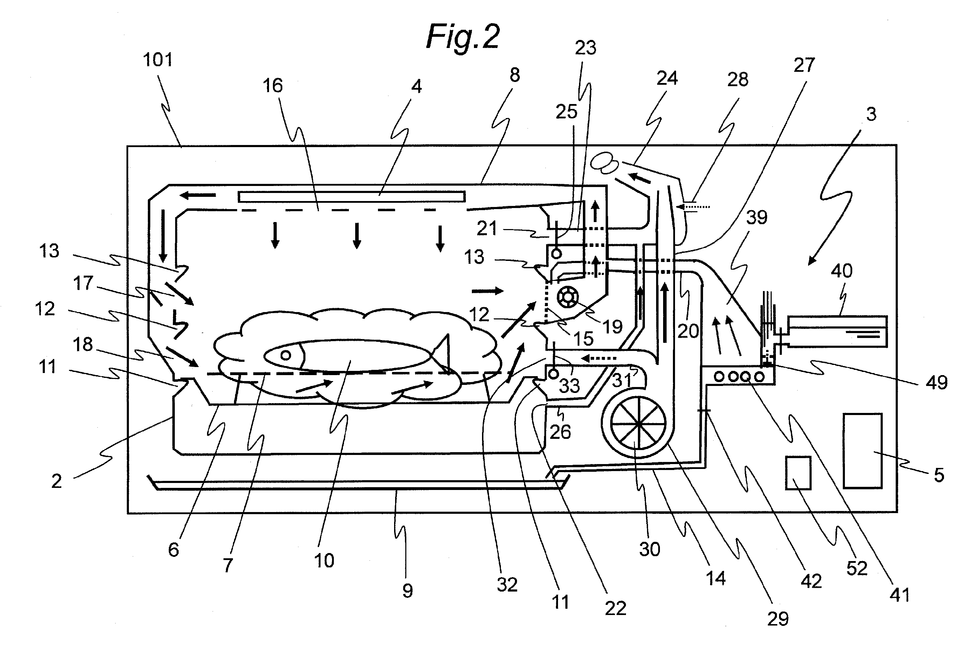

This steam cooker includes a rectangular parallelepiped-shaped casing 101, a heating chamber 2 (see Fig. 2), an opening/closing door 103, and a handle structure 104. The opening/closing door 103, when turned about a lower edge of the opening/closing door 103 generally as a center axis, opens and closes an opening portion of a door frame 120 on the front side of the heating chamber 2. A heat-resistant glass 111 is placed generally at a center portion of the opening/closing door 103 so that a user is enabled to discern an internal state of the heating chamber 2 through the heat-resistant glass 111. A packing (not shown) made of a heat-resistant resin is fixed at a rear face of the opening/closing door 103 so as to surround the heat-resistant glass 111. It is noted that the door frame 120 is an example of a plate member of this invention. A member different in shape from the door frame 120 may also be adopted as an example of the plate member of the invention.

When the opening/closing door 103 is fully closed, the packing is so designed as to be strongly pressed against a peripheral edge portion of the opening of the heating chamber 2. With this arrangement, leakage of steam or the like from between the opening/closing door 103 and the peripheral edge portion of the opening of the heating chamber 2 is prevented.

There is an operation panel on the right side of the front face of the casing 101. Included in the operation panel are a dial 105 as an encoder button, a decision button 106, a start button 107, an operation button 114, and a liquid crystal display part 108.

The dial 105 and the decision button 106 are for multipurpose use and, for example, a desired cooking menu item can be selected from among a plurality of cooking menu items displayed in the liquid crystal display part 108 by appropriately turning the dial 105. The desired cooking menu item can be decided by the decision button 106.

Also, the start button 107 is to be used for starting up a cooking. The operation button 114 includes a cancel button and the like, where the cancel button is to be used for canceling a cooking.

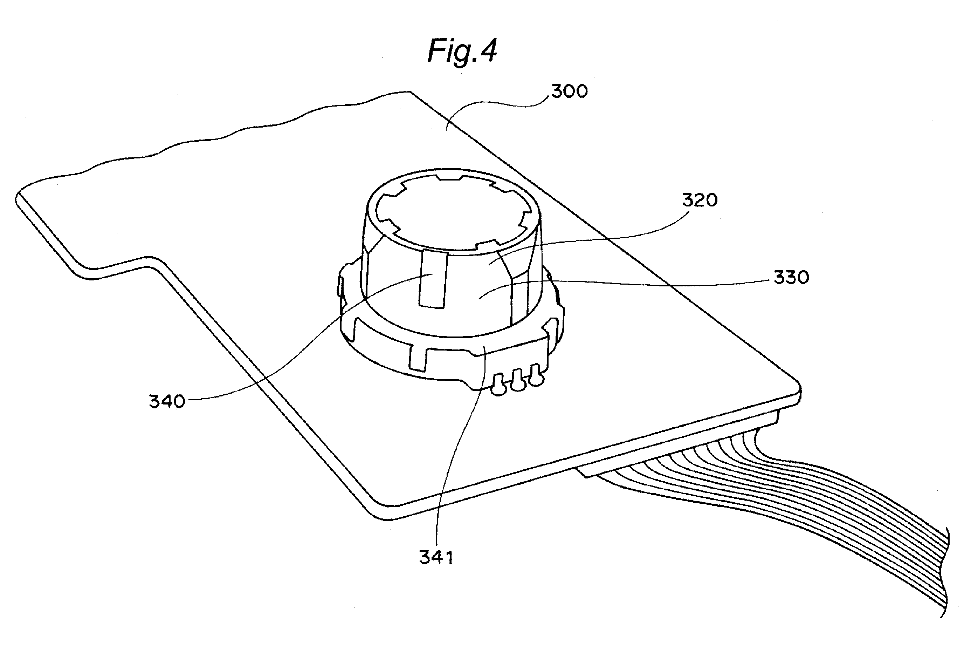

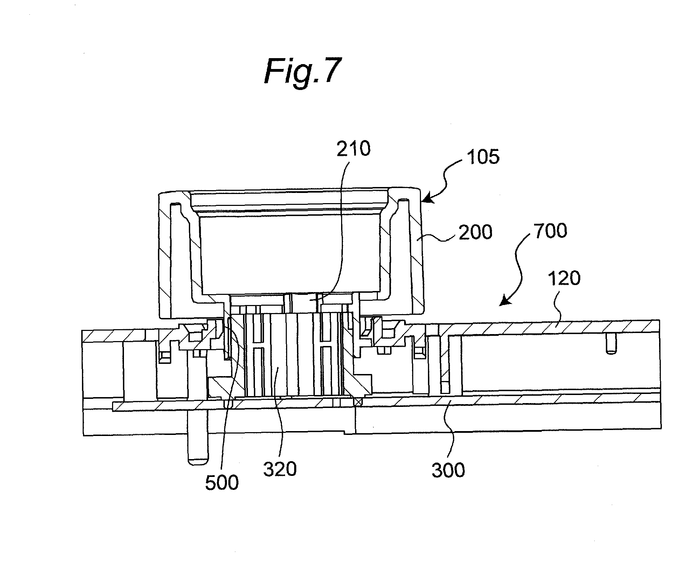

The dial 105 is to be engaged with a rotary part 330 (see Fig. 4) of a rotary encoder 320 (see Fig. 4) mounted on a circuit board inside the steam cooker so as to transfer a rotational power to the rotary encoder 320. With this contrivance, a turning speed at which the dial 105 is turned by the user is measured, and according to this information, the way for displaying the cooking menu in the LIQUID CRYSTAL DISPLAY part 108 is changed as appropriate. The dial 105, the door frame 120 and the rotary encoder 320 constitute a structure 700 for preventing the encoder button from coming out of place (see Fig. 7).

Referring to Fig. 1, reference sign 109 denotes an metallic annular member having an outer-circumferential conical surface. This annular member 109 is fixed to the door frame 120. The annular member 109 supports the dial 105 to fulfill a role of radially supporting the dial 105. The annular member 109 also serves for providing a comfortable texture in user's operation of the dial 105 as well as a high-grade appearance of the steam cooker.

Fig. 2 is an outline configurational view of the cooking device.

This cooking device includes a casing 101, a heating chamber 2, a steam generator 3 for generating steam, a steam heater 4, and a control unit 5.

The heating chamber 2 is provided in the casing 101. The steam heater 4 heats steam from the steam generator 3 into superheated steam. The control unit 5 controls operations of the steam generator 3, the steam heater 4 and the like. It is noted that the superheated steam refers to steam heated up to a superheated state of 100°C or higher.

The heating chamber 2 has, on its front side, an opening which is opened and closed by the opening/closing door 103 (see Fig. 1). Side faces, a bottom face and a top face of the heating chamber 2 are each made of a stainless steel plate. The user puts a heating object 10, which is to be heated, into and out of the heating chamber 2. Around the heating chamber 2, a heat insulating material (not shown) is placed to provide heat insulation between inside and outside of the heating chamber 2.

Inside the heating chamber 2, a tray 6 made from iron or other metals or ceramics is placed with a specified distance from the bottom face of the heating chamber 2. The tray 6 is supported by a lower receiving shelf 11 provided on right-and-left side walls of the heating chamber 2. A cooking net 7 made of iron or other metals is mounted on the tray 6, and the heating object 10 is placed generally at a center of the cooking net 7. Thus, the heating object 10 is to be set in the heating chamber 2 with a distance from the bottom face of the heating chamber 2.

On the right-and-left side walls of the heating chamber 2, a middle receiving shelf 12 positioned upper than the lower receiving shelf 11, and an upper receiving shelf 13 positioned upper than the middle receiving shelf 12 are provided. The middle receiving shelf 12 and the upper receiving shelf 13 are also enabled to support the tray 6 like the lower receiving shelf 11.

The steam generator 3 has a steam generation section 39, a water tank 40, a water-heating heater 41, and a solenoid valve 49. The water tank 40 contains water to be supplied to the steam generation section 39. The water-heating heater 41, which is placed in the steam generation section 39, heats and evaporate water accumulated in the steam generation section 39. The water-heating heater 41 is formed by coiling a sheath heater into a spiral shape.

Opening of the solenoid valve 49 causes water within the water tank 40 to flow into the steam generation section 39, and closing of the solenoid valve 49 blocks water from moving from the water tank 40 to the steam generation section 39. A water level sensor (not shown) is provided in the steam generation section 39, so that the solenoid valve 49 is opened and closed according to a detected value of the water level sensor.

The water tank 40 is removably fittable to the steam generation section 39, and can be taken out of the casing 101 with the front side headed. A drain valve 42 is set at the bottom portion of the steam generation section 39. One end of a drain path 14 is connected to the drain valve 42. The other end of the drain path 14 is positioned above a drip pan 9. The dew receiver 9 is fittable to and removable from the casing 101, and can be taken out of the casing 101 with the front side headed.

In one side face of the heating chamber 2, a circulatory inlet port 15 is provided between the upper receiving shelf 13 and the middle receiving shelf 12. Then, on the top face of the heating chamber 2, a first blowoff opening 16 is provided so as to be opposed to the steam heater 4. Further, second, third blowoff openings 17, 18 are provided on the other side face of the heating chamber 2. The second blowoff opening 17 is positioned between the upper receiving shelf 13 and the middle receiving shelf 12. On the other hand, the third blowoff opening 18 is positioned between the middle receiving shelf 12 and the lower receiving shelf 11. The circulatory inlet port 15, the first blowoff opening 16, the second blowoff opening 17 and the third blowoff opening 18 make a space inside the heating chamber 2 and a space inside a circulation path 8 communicated with each other.

The circulation path 8 has one end portion connected to the circulatory inlet port 15 and the other end portion connected to the second blowoff opening 17 and the third blowoff opening 18. A circulation fan 19 near the circulatory inlet port 15 sucks steam within the heating chamber 2 through the circulatory inlet port 15 and blows off toward the steam heater 4. Then, the steam is heated by the steam heater 4 to be superheated steam, and thereafter blown out toward within the heating chamber 2 through the first blowoff opening 16 and the second, third blowoff openings 17, 18.

A portion of the circulation path 8 near the circulatory inlet port 15 is connected to the steam generation section 39 via a steam discharge path 20. As a result of this, steam generated in the steam generation section 39 flows along the steam discharge path 20 to enter the circulation path 8 and merge with the steam derived from the circulatory inlet port 15, thus flowing toward the steam heater 4. Besides, excess steam in the heating chamber 2 is allowed to flow out of the heating chamber 2 through first, second exhaust ports 21, 22.

One end portion of an exhaust path 23 is connected to the first exhaust port 21. The other end portion of the exhaust path 23 forms an ejector 24. The first exhaust port 21 can be opened and closed by an exhaust damper 25.

One end portion of an exhaust tube 26 is connected to the second exhaust port 22. The other end portion of the exhaust tube 26 is connected to the exhaust path 23. With this arrangement, steam within the exhaust tube 26 is allowed to merge with steam within the exhaust path 23 and flow out of the casing 101 from the ejector 24. Further, steam directed outward of the casing 101 from the ejector 24 is allowed to be mixed and diluted with air derived from a dilution air path 27 and a suction duct 28.

The dilution air path 27 has one end portion inserted into the ejector 24 and the other end portion connected to a fan casing 29. An exhaust dilution fan 30 in this fan casing 29 feeds air to the ejector 24. Also, the fan casing 29 is connected to an air supply port 32 via an air supply path 31. The air supply port 32 can be opened and closed by an air supply damper 33. A magnetron 52 for generating microwaves is also set in the casing 101.

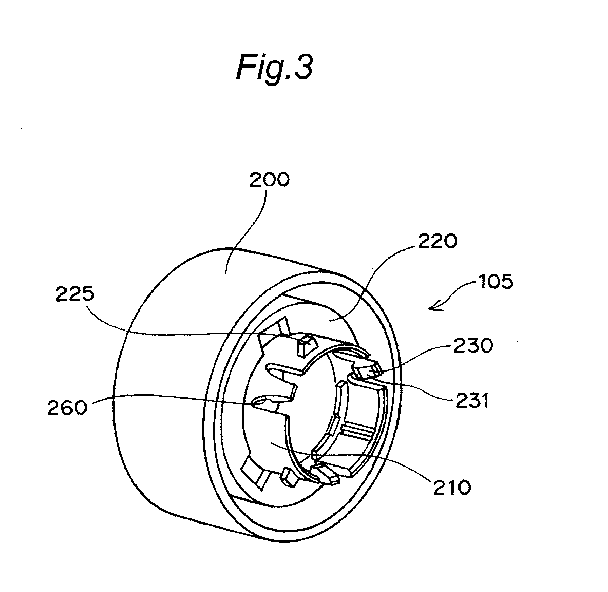

Fig. 3 is a perspective view showing the dial 105, which is an encoder button.

As shown in Fig. 3, the dial 105 has a cylindrical-shaped operation part 200, a generally cylindrical-shaped fitting part 210, a coupling part 220, and three retaining projections 225. The coupling part 220 couples an inner circumferential side of the operation part 200 and an outer circumferential side of the fitting part 210 to each other. As will be detailed later, the fitting part 210 is to be externally fitted to and thereby engaged with the outer circumferential surface of the rotary encoder 320 set on the circuit board.

As shown in Fig. 3, the fitting part 210 projects axially from a central side of the operation part 200. The fitting part 210 projects from the coupling part 220 to an axial one side on which the rotary encoder 320 is provided.

The fitting part 210 has a plurality of inner claws 230 as engaging portions. The plurality inner claws 230 are arranged circumferentially at equal intervals. Each of the inner claws 230 is bent radially inward in a V shape from its forward end on one side of the fitting part 210 opposite to the operation part 200 side. Each inner claw 230 has a planar portion 231 in its one surface facing radially inward.

The three retaining projections 225 are arranged so as to be circumferentially spaced from one another. Each of the retaining projections 225 projects radially. Each retaining projection 225 has a generally isosceles-trapezoidal cross section in a plain view.

The fitting part 210 has a plurality of cutouts 260. These cutouts 260 are intended to lower the rigidity of the fitting part 210 so that flexibility of the fitting part 210 is improved. Thus, occurrence of cracks or the like in the fitting part 210 is prevented when the fitting part 210 is externally fitted and fixed to the rotary encoder 320.

Fig. 4 is a perspective view showing the rotary encoder 320.

The rotary encoder 320 is set and fixed on a circuit board 300. The rotary encoder 320 has a cylindrical-shaped stationary portion 341, and a cylindrical-shaped rotary part 330. The stationary portion 341 is fixed to the circuit board 300. The stationary portion 341 is stationary relative to the circuit board 300. On the inner circumferential surface side of the cylindrical-shaped stationary portion 341, the rotary part 330 is internally fitted so as to be axially immobile, but circumferentially turnable, relative to the stationary portion 341. The rotary part 330 is longer in axial length than the stationary portion 341. A plurality of engaging grooves 340 are provided in portions of the outer circumferential surface of the rotary part 330 which are not adjacent to the stationary portion 341. Each of the engaging grooves 340 extends along the axial direction of the rotary part 330. The plurality of engaging grooves 340 are arranged circumferentially at equal intervals. The fitting part 210 (see Fig. 3) of the dial 105 is externally fitted and fixed to the rotary part 330. The plurality of inner claws 230 (see Fig. 3) of the fitting part 210 are to be engaged with the annular grooves 340 of the rotary part 330. Thus, the dial 105 and the rotary part 330 are to be engaged with each other, so that rotational power of the dial 105 is transferred to the rotary part 330.

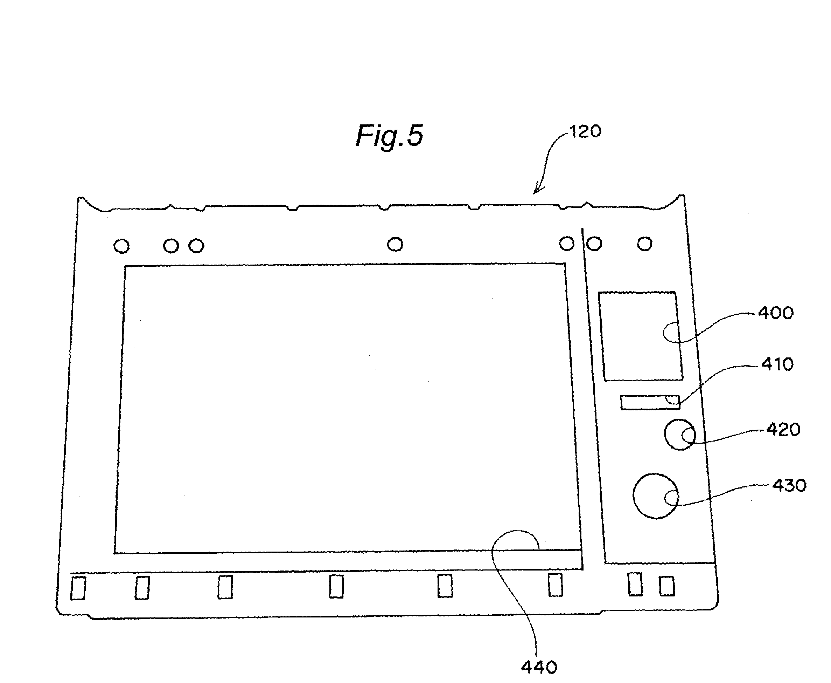

Fig. 5 is a perspective view showing the door frame 120 of the steam cooker.

Referring to Fig. 5, reference sign 400 denotes an opening into which the liquid crystal display part 108 is to be fitted, and 410 denotes an opening into which the operation button 114 is to be fitted. Also, 420 denotes an opening into which the start button 107 is to be fitted, and 430 denotes an opening into which the dial 105 is to be fitted. Also, 440 denotes an opening into which the heat-resistant glass 111 (see Fig. 1) is to be fitted.

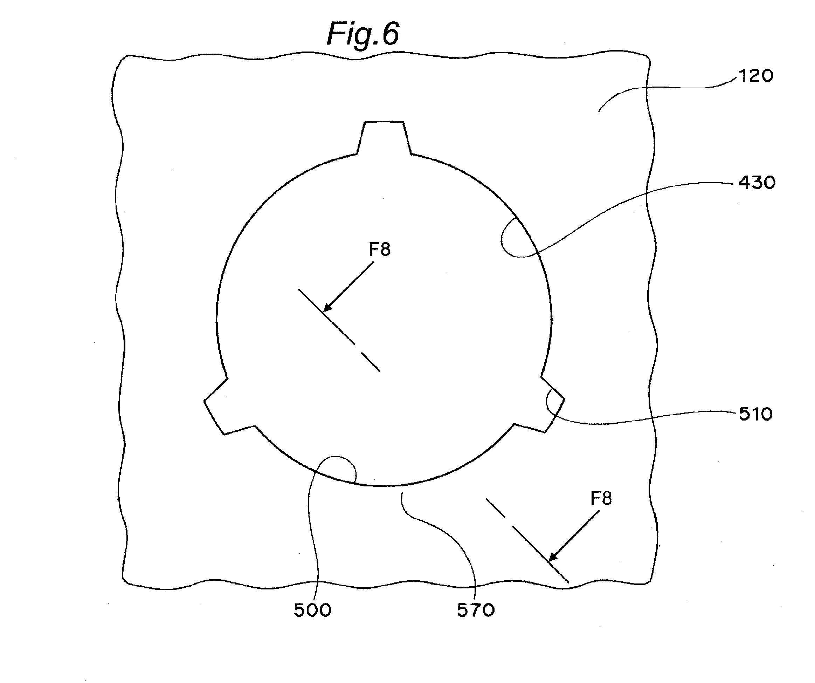

Fig. 6 is an enlarged plan view of a vicinity of an opening 430 in the door frame 120 for fitting-in of the dial 105 (hereinafter, referred to as dial opening).

As shown in Fig. 6, the dial opening 430 has a circular-shaped through hole 500 and three recess portions 510, each of the recess portions 510 having an isosceles-trapezoidal opening shape. The recess portions 510 extend through the door frame 120. The recess portions 510 are communicated with a disc-shaped recess portion for housing the retaining projections (not shown), respectively, which is present on the surface of the door frame 120 opposite to the operation part 200 side surface. Each of the recess portions 510 is communicated with the through hole 500. The three recess portions 510 are three-equidistantly arranged on the circumference of the through hole 500.

An inner diameter of the through hole 500 is slightly larger than an outer diameter of the cylindrical portion of the generally cylindrical-shaped fitting part 210 (see Fig. 3), allowing the fitting part 210 to pass through the through hole 500. On the other hand, an inner diameter of a virtual circumcircle of each of the three retaining projections 225 of the dial 105 is larger than the inner diameter of the through hole 500. As a result, the three retaining projections 225 are inhibited from passing through the through hole 500. Also, the inner diameter of the disc-shaped recess portion for housing the retaining projection is larger than the inner diameter of the virtual circumcircle. As a result, the three retaining projections 225 are freely turnable within the disc-shaped recess portion for housing the retaining projections.

The opening of each recess portion 510 has a planar shape corresponding to a planar shape of each retaining projections 225 (see Fig. 3) of the dial 105. Also, each recess portion 510 has an opening area slightly larger than the retaining projections 225 of the dial 105, allowing the retaining projections 225 to pass through the recess portion 510.

With the construction as described above, the structure 700 for preventing the encoder button from coming out of place is assembled as follows.

First, the fitting part 210 (see Fig. 3) of the dial 105 is passed through the through hole 500 (see Fig. 6), and then externally fitted to the forward end side of the outer circumferential surface of the rotary part 330 (see Fig. 4) of the rotary encoder 320 so that forward end-side end portions of the inner claws 230 of the fitting part 210 are engaged with the engaging grooves 340 (see Fig. 4) of the rotary encoder 320.

Next, the dial 105 is turned appropriately as required until the three retaining projections 225 of the fitting part 210 and the recess portions 510 of the door frame 120 become coincident in circumferential phase with each other.

Subsequently, in the state that the three retaining projections 225 and the recess portions 510 of the door frame 120 are coincident in circumferential phase with each other, the dial 105 is pushed toward the rotary encoder 320 so that the inner claws 230 of the fitting part 210 are fully engaged with the engaging grooves 340 of the rotary encoder 320. In this state, the three retaining projections 225 are housed in the disc-shaped recess portion for housing the retaining projections present on the surface of the door frame 120 on the side opposite to the operation part 200 side. Then, full engagement of the inner claws 230 of the fitting part 210 to the engaging grooves 340 of the rotary encoder 320 can be confirmed by a clicking engagement sound.

Finally, the dial 105 is appropriately turned circumferentially, so that the three retaining projections 225 are turned in the disc-shaped recess portion for housing the retaining projections. Then, the three retaining projections 225 and the recess portions 510 of the door frame 120 are made non-coincident in circumferential phase with each other. Thus, the assembly of the structure 700 for preventing the encoder button from coming out of place constituted by the dial 105, the door frame 120 and the rotary encoder 320 is completed.

Fig. 7 is a schematic sectional view of the structure 700 for preventing the encoder button from coming out of place.

Referring to Fig. 7, reference sign 105 denotes the dial, 200 denotes the operation part, and 320 denotes the rotary encoder having the rotary part 330. Also, 300 denotes the circuit board, and 120 denotes the door frame. As shown in Fig. 7, the door frame 120 has the through hole 500. The fitting part 210 of the dial 105 is externally fitted to the rotary part 330 of the rotary encoder 320.

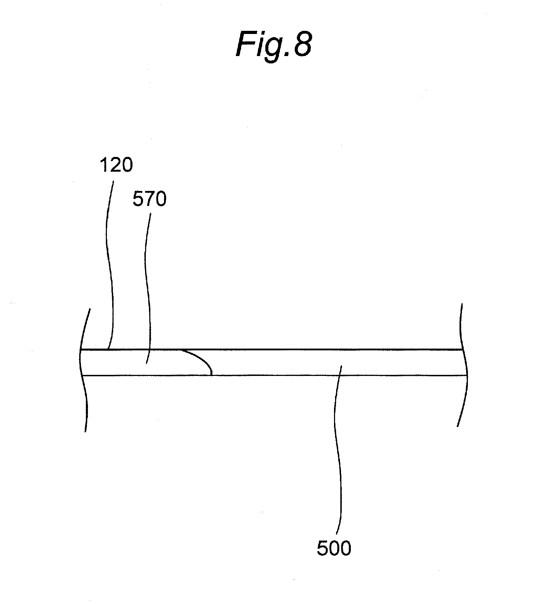

Fig. 8 is an outline sectional view as viewed along a line F8-F8 of Fig. 6.

A peripheral portion 570 of the through hole 500 of the door frame 120 is subjected to C-surface cutting (chamfering). This chamfering is applied smoothly so as to suppress rises of edges.

According to the structure 700 for preventing the encoder button from coming out of place in this embodiment, in the state that the inner claws 230 of the dial 105 are fitted into the engaging grooves 340 of the rotary encoder 320, the retaining projections 225 are positioned on side of the door frame 120 opposite to the operation part 200 side, and the three retaining projections 225 are allowed to pass through the three recess portions 510 only when the three retaining projections 225 are coincident in circumferential phase with the three recess portions 510.

Accordingly, at places where the three retaining projections 225 are non-coincident in circumferential phase with the three recess portions 510, more specifically, at places other than a fittable-and-removable place, which are the only three places in one turn, even if the user pulls up the dial 105, which is the encoder button, with large force in a direction for increased distance from the door frame 120, the retaining projections 225 collide with the surface of the door frame 120 that is adjacent to the openings of the recess portions 510 on the side opposite to the operation part 200 side, so that the dial 105, receiving a normal force from the surfaces, can reliably be prevented from going farther than a specified distance from the door frame 120. Therefore, the dial 105 never comes out from the rotary encoder 320.

Also, according to the structure 700 for preventing the encoder button from coming out of place in this embodiment, when the structure 700 for preventing the encoder button from coming out of place needs to be disassembled for maintenance or the like, turning the dial 105 appropriately as required makes it possible to disassemble the structure 700 for preventing the encoder button from coming out of place easily and smoothly by only pulling out the dial 105 in the state that the three retaining projections 225 are coincident in circumferential phase with the three recess portions 510. Therefore, the maintenance can be achieved easily and smoothly.

Also, according to the structure 700 for preventing the encoder button from coming out of place in this embodiment, since each of the inner claws 230 has the planar portion 231 in its surface facing radially inward, the coefficient of static friction between the planar portion 231 and the engaging grooves 340 can be lowered. Therefore, at a place where the three retaining projections 225 are coincident in circumferential phase with the three recess portions 510, the inner claws 230 of the dial 105 can be unfastened from the engaging grooves 340 of the rotary encoder 320 by applying more than a certain level of force without pulling with excessively large force. Therefore, maintenance involving the disassembly of the dial 105 can be achieved easily.

Also, according to the structure 700 for preventing the encoder button from coming out of place in this embodiment, friction generated upon contact during the rotation between the fitting part 210 and the C-surface cutting portion 570 (see Fig. 6) in peripheral portions of the through hole 500 of the door frame 120 can be reduced. Therefore, wear of contact-sliding surfaces of the dial 105 and the door frame 120 can be reduced, and the operation part 200 of the dial 105 can be smoothly operated.

In the structure 700 for preventing the encoder button from coming out of place in this embodiment, the planar shape of the retaining projections 225 and the shape of the opening of the recess portions 510 are generally isosceles-trapezoidal shapes. However, in this invention, the planar shape of the retaining projections and the shape of the opening of the recess portions may also be rectangular, semicircular or any other shapes.

Also, in the structure 700 for preventing the encoder button from coming out of place in this embodiment, the retaining projections 225 and the recess portions 510 are arranged circumferentially at three equal intervals. However, in this invention, the retaining projections and the recess portions may be placed circumferentially each one in number, or circumferentially two or N in number (where N is a natural number of 4 or larger) at equal intervals. Also in this invention, the retaining projections and the recess portions may also be arranged in some plurality circumferentially at unequal intervals.

Also, in the structure 700 for preventing the encoder button from coming out of place in this embodiment, the number of the retaining projections 225 and the number of the recess portions 510 are equal to each other. However, in this invention, the number of the retaining projections may be smaller than the number of the recess portions. In this case, needless to say, in the assembly of the structure for preventing the encoder button from coming out of place, all the retaining projections are coincident in phase with the same number of recess portions as the number of the retaining projections out of the plurality of recess portions.

Also, in the structure 700 for preventing the encoder button from coming out of place in this embodiment, the retaining projections 225 are housed in the recess portion for housing the retaining projections positioned on the surface of the door frame 120 on one side opposite to the operation part 200 side. However, in this invention, the recess portion for housing the retaining projections does not need to be present on the surface of the door frame on one side opposite to the operation part side. Instead, only if the retaining projections can be freely turned in synchronization with turn of the operation part, the surface of the door frame on the side opposite to the operation part side may be formed into any shape. Further in this invention, the recess portions may be those which do not extend through the door frame and which communicate with inside of a chamber for housing the retaining projections formed in the door frame. In this case, needless to say, the chamber for housing the retaining projections has a radial breadth of its cross section that can house a virtual circumcircle of each retaining projection.

Also, in the structure 700 for preventing the encoder button from coming out of place in this embodiment, the engaging part is provided by the inner claws 230. However, in this invention, it is also allowable that the engaging part is provided by splines or serrations or the like while the engaging grooves are spline grooves or serration grooves or the like, where the fitting portion of the encoder button and the rotary part of the rotary encoder are to be engaged with each other in spline engagement or serration engagement or the like so as to be in synchronous rotations. Further, it is also possible that the fitting part is an inner circumferential surface or outer circumferential surface of the fitting portion, where the fitting portion is externally or internally press-fitted into the rotary part of the rotary encoder.

Furthermore, the structure 700 for preventing the encoder button from coming out of place in this embodiment is provided as part of a steam cooker. However, the structure for preventing the encoder button from coming out of place in this invention may be part of a cooking device using no superheated steam such as ovens, cooking stoves, microwave ovens or IH cooking heaters, and moreover may be part of a cooking device using superheated steam such as ovens, cooking stoves, microwave ovens or IH (Induction Heating) cooking heaters. The structure for preventing the encoder button from coming out of place in this invention may be part of various types of measuring devices.

### REFERENCE SIGNS LIST

105 dial
120 door frame
200 operation part
210 fitting part
220 coupling part
225 retaining projection
230 inner claw
231 planar portion
320 rotary encoder
330 rotary part
340 engaging groove
341 stationary portion
430 dial opening
500 through hole
510 recess portion
570 peripheral portion of through hole of door frame
700 structure for preventing encoder button from coming out
of place

## Claims

1. A structure for preventing an encoder button from coming out of place, comprising:
a rotary encoder having a stationary portion and a rotary part rotating relative to the stationary portion, wherein the rotary part has a plurality of engaging grooves which are positioned on an outer circumferential surface of the rotary part so as to extend axially with circumferential distances from one another;
an encoder button having an operation part having an outer circumferential surface, a generally cylindrical-shaped fitting part which projects axially from a central side of the operation part and which is to be fitted to the rotary part, an engaging part which is provided in the fitting part so as to be engaged with the engaging grooves, and at least one or more retaining projections which project from the fitting part radially outward so as to be circumferentially spaced from one another; and
a plate member having a through hole into which the fitting part is to be fitted, and at least one or more recess portions through which the retaining projections are allowed to pass, wherein
the retaining projections are allowed to pass through the recess portions when the retaining projections are coincident in circumferential phase with the recess portions, while the retaining projections are axially engaged with the plate member when the retaining projections are non-coincident in circumferential phase with the recess portions.

2. The structure for preventing an encoder button from coming out of place as claimed in Claim 1, wherein
the engaging part is an inner claw bent radially inward in a V shape from a forward end on one side of the fitting part opposite to the operation part side, and
the inner claw has a planar portion in a surface facing radially inward.

3. The structure for preventing an encoder button from coming out of place as claimed in Claim 1 or 2, wherein
the encoder button has a coupling part for coupling the fitting part and the operation part to each other, and
peripheral portions of the plate member around the through hole are subjected to chamfering surface cutting.
